(19) Europäisches Patentamt
European Patent Office
Office européen des brevets

(11) **EP 0 727 592 A1**

(12) **EUROPEAN PATENT APPLICATION**

(43) Date of publication:
21.08.1996 Bulletin 1996/34

(51) Int. Cl.⁶: $F16F\ 15/00$, $G05D\ 19/02$

(21) Application number: 96101945.2

(22) Date of filing: 10.02.1996

(84) Designated Contracting States:
AT BE CH DE DK ES FR GB GR IE IT LI LU MC NL PT SE

(30) Priority: 17.02.1995 US 390766

(71) Applicant: Poelouev, Avenir
Moskau 113519 (RU)

(72) Inventor: Poelouev, Avenir
Moskau 113519 (RU)

(74) Representative: Arendt, Helmut, Dipl.-Ing.
Patentanwalt
Bergiusstrasse 2 c
30655 Hannover (DE)

(54) **Universal dynamic stabilizer**

(57) This Invention concerns a dynamic stabilization of the means of transport under standard operation conditions and also seismoproof and tall structures through the use of their weight proper.

The purpose of the Invention is ensure a dynamic stabilization and non-overturnability of the means of transport under standard operation conditions and also to ensure a dynamic stabilization of seismoproof and tall structures during earthquakes, severe wind loads and other calamities.

A – The control device of the Universal Dynamic Stabilizer.
B – The means of transport being dynamically stabilized.

Fig. 1

## Description

Description of the Invention

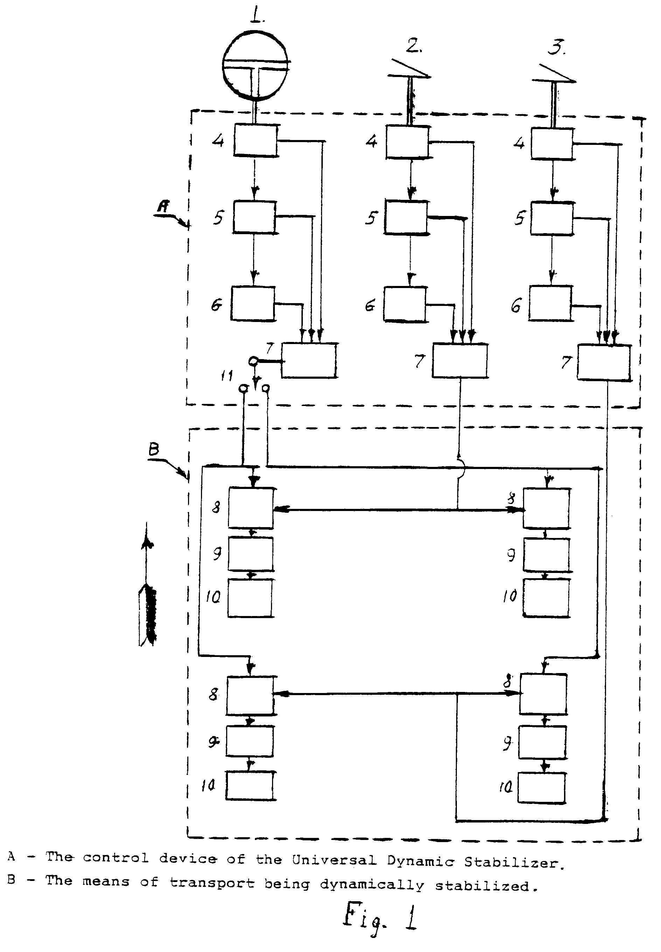

The purpose of the Invention is achieved through the use of the Universal Dynamic Stabilizer according to this Invention (see Fig. 1 below) which consists of several control channels (1, 2 and 3) the number of which corresponds to the number of controls of the objects being dynamically stabilized. Each control channel consists of a linear senser (4) of a linear travel of a control, a first differentiation circuit (5), a second differentiation circuit (6), a summator (7), a summation converter (8), and also operating devices (9) and working mechanisms (10) situated at every point of suspension of the objects being dynamically stabilized. In addition, there is a direction switch (11) in the direction movement channel of the Universal Dynamic Stabilizer. Therefore, the force acting upon a corresponding point of suspension by the Universal Dynamic Stabilizer is defined according to the following equation:

$$p_i = al_i + b\frac{dl_i}{dt} + \frac{d^2l_i}{dt^2} - f,$$

where:

$p_i$     - the force acting upon i-th point of suspension;

$l_i$     - a linear travel of the corresponding control of the object being dynamically stabilized;

a,b and c     - proportionality coefficients desponding upon the design properties of the object being dynamically stabilized;

f     - a feedback force defined by the design properties of the object being dynamically stabilized.

The Universal Dynamic Stabilizer is functioning in the following manner. As it is known in the practice, when the means of transport is moving along a curvature it is subjected to an action of an overturning moment, which is proportional to a curvature radius, the speed of the vehicle, the position of the gravity centre of the vehicle over a pavement and a reaction of the inner points of suspensions of the vehicle in relation to the turn. As it is impossible to change the curvature radius of the movement and as it is undiserable to reduce the speed of the vehicle, the Universal Dynamic Stabilizer ensures a compression of the spring elements of the inner points of suspension. Owing to this a considerable part of the overturning moment is eliminated as a result of compensating the reaction of the inner points of suspention and lowering the gravity centre of the vehicle. At the same time an additional stabilizing moment is formed by the spring elements of the outer points of suspention of the vehicle in relation to the turn. (See Channel 1 for the steering wheel in Fig. 1) The analogous compensation of the overturning moment is ensured during the start or acceleration of the vehicle (see channel 2 for the acceleration pedal in Fig. 1), when the spring elements of the front points of suspension are compressed, and during applying the brakes (see channel 3 for the brake pedal in Fig. 1), when the spring elements of the rear points of suspension are compressed, owing to which there are no jerks of the front and rear parts of the vehicle correspondingly. The Universal Dynamic Stabilizer of this Invention may be also efficiently used for a dynamic stabilization of seismoproof and tall structures during earthquakes, severe wind loads and other Calamities through the use of their weight proper by a purposeful changing of the epure of bearing reaction forces because these structures under such conditions may be considered as the means of transport of a special kind when their foundations function as chassis and the rest parts of them are suspended parts. In the case the number of control channels would depend on the very design of the seismoproof and tall structures, on the main threatening directions of earthquakes, on the wind rose and some other conditions of the terrain where they are situated.

## Claims

1.  I Claim the Universal Dynamic Stabilizer intended for a dynamic stabilization of the means of transport under standard operation conditions and also the seismoproof and tall structures during earthquakes, severe wind loads and other calamaties through the use of their weight proper.
    The Universal Dynamic Stabilizer according to this Invention consists of several control channels the number of which corresponds to the number of controls of the objects being stabilized in a dynamic way, and each control channel consists of a control, a linear senser of the linear travel of the control, a first differentiation circuit, a second differentiation circuit, a summator, a summation converter, an operating device, a working mechanism and a direction switch if necessary.

2.  The Universal Dynamic Stabilizer according to Claim 1 when the object being stabilized is a motor car or other land means of transport.

3.  The Universal Dynamic Stabilizer according to claim 1 when the object being stabilized is a marine vessel.

4.  The Universal Dynamic Stabilizer according to claim 1 when the object being stabilized is an aircraft.

5. The Universal Dynamic Stabilizer according to claim 1 when the object being stabilized is a seismoproof or tall structure.

A — The control device of the Universal Dynamic Stabilizer.
B — The means of transport being dynamically stabilized.

Fig. 1

EP 0 727 592 A1

# EUROPEAN SEARCH REPORT

**European Patent Office**

**Application Number**
EP 96 10 1945

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 222 329 (TOYODA CHUO KENKYUSHO KK) 20 May 1987 * the whole document * * page 1, line 5 - line 9 * * page 26, line 23 - page 28, line 25; figure 13 * | 1,2,5 | F16F15/00 G05D19/02 |
| Y | | 3,4 | |
| Y | PATENT ABSTRACTS OF JAPAN vol. 017, no. 123 (M-1380), 15 March 1993 & JP-A-04 306197 (MITSUBISHI ELECTRIC CORP), 28 October 1992, * abstract * | 4 | |
| Y | PATENT ABSTRACTS OF JAPAN vol. 017, no. 064 (M-1364), 8 February 1993 & JP-A-04 272312 (KAJIMA CORP), 29 September 1992, * abstract * | 3 | |
| X | EP-A-0 579 182 (IVECO MAGIRUS) 19 January 1994 * the whole document * | 1,2 | TECHNICAL FIELDS SEARCHED (Int.Cl.6) F16F G05D F15B |
| A | FR-A-2 641 050 (BOSCH GMBH ROBERT) 29 June 1990 * the whole document * | 1,2 | |

The present search report has been drawn up for all claims

| Place of search | Date of completion of the search | Examiner |
|---|---|---|
| THE HAGUE | 18 June 1996 | Van der Veen, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

5